# EUROPEAN PATENT APPLICATION

(11) **EP 2 551 241 A1**
(43) Date of publication of application: **30.01.2013**
(21) Application number: 11175401.6
(22) Date of filing: 26.07.2011
(51) Int. Cl.: C02F 1/30, C02F 1/44

(54) **Water treatment device and process**

(71) Applicant: Shell Internationale Research Maatschappij B.V., 2596 HR The Hague (NL)
(72) Inventor: Nijmeijer, Arian, 1031 HW Amsterdam (NL); Van Straten, Hendricus Adrianus, 1031 HW Amsterdam (NL)
(74) Representative: Matthezing, Robert Maarten

(57) **Abstract**

A device and process for treatment of water by filtration using a photocatalytic membrane, wherein light is guided from a light source to the membrane via a optical fibre. The device comprises a housing encasing one or more membranes in a permeate collection channel. The membranes comprise channels between a supply for untreated water and a discharge for retentate. The channels are provided with photocatalytic walls within a light exposure scope of one or more optical fibres connected to a light source.

## Description

The present invention relates to a device and a process for treatment of water, in particular purification of water, such as municipal waste water or waste water from oil recovery, mining or industrial processes.

Membrane filtration can be used to remove contaminations from water. Depending on the pore size of the membrane, distinction is made between microfiltration (for the removal of, e.g., bacteria), ultrafiltration (suitable for removing colloids and viruses), nanofiltration (suitable for removing colorants, inorganic contaminants, pesticides, etc.) and reverse osmosis (suitable for desalination of salt water). Due to the effect of biofouling such membranes need to be cleaned on a regular base and have limited purification efficiency.

It is an object of the invention to provide a device and a process for water treatment with improved purification efficiency, particularly for organic contaminants. It is a further object to provide a device requiring less maintenance time and effort for the removal of biofouling.

The object of the invention is achieved with a device for water treatment comprising a housing encasing one or more membranes and a permeate collection channel at least partly surrounding the one or more membranes, wherein the membranes comprise one or more channels between a supply for untreated water and a discharge for retentate, wherein at least a part of the channels is provided with photocatalytic channel walls within a light exposure scope of one or more optical fibres connected to a light source. The one or more optical fibres are for instance positioned within at least a part of the channels. Combining membrane filtration with photocatalytic breakdown of contaminants does not only improve the degree of purification but also reduces biofouling. Water is transported through the channels, typically under pressure. Most of the water is pressed through the pores of the membrane in a direction perpendicular to the flow direction within the channel. A concentrate of contaminants remains in the channel as a retentate and is discharged via the channel. Purified water exits the membrane at its outer peripheral surface.

The membrane can for instance be a monolith membrane or a multichannel membrane. Such membranes comprise a plurality of channels and have a high area-to-volume ratio and, consequently, a higher filtration capacity.

The channels can have a constant diameter or varying diameters, e.g., the diameters of the channels may gradually decrease from the in flow opening to the out flow opening or the other way around. Optionally, the channel diameters may gradually increase or decrease as a function of the distance to the distance to the outer periphery. The channels may have a square, rectangular, wedge-shaped or circular cross sectional shape or any other suitable shape. The average width of the channels may for instance be between 0.5 - 5 mm. Smaller or larger channels can also be used if so desired. The cross sectional channel density of the membrane can for instance be 2 - 4 channels per cm².

The membrane can for instance have an area-to-volume ratio of about 30 to about 800 m²/m³, e.g., of about 150 to 750 m²/m³.

The membrane can for instance be a micro-filtration membrane. In such case the pore size is typically between 100 - 1000 nm, at least at the channel walls. Preferably, the membrane is an ultra filtration membrane with pore sizes between 10 - 100 nm at least at the channel walls. This would also remove colloids and viruses. More preferably, nano-filtration membranes are used having a pore size of 1 - 10 nm at least at the channel walls, which would even remove colorants, pesticides and oily components.

Pore sizes at a distance from the channel wall may, e.g., be of the same size or larger than the pores at the channel wall. For instance, the membrane may have a layered structure with smaller pores at the channel wall and with a porous support structure between the channel with larger pores.

Optionally, a plurality of membranes can be used. For instance, one or more ultra filtration membranes can be used downstream one or more microfiltration membranes. Similarly, one or more nanofiltration membranes can be used downstream one or more micro- and/or ultrafiltration membranes.

Alternatively, or additionally, the membrane may be a membrane module including a bundle of hollow fibre membranes. In such case, water to be treated can be supplied via the fibres and be filtered when leaving the fibre via the fibre wall (inside-out filtration). In that case, at last the inner wall of the hollow fibre membranes should be photocatalytic. Alternatively, water to be treated can be supplied to the space between the bundled fibres and be filtered when entering the fibres via their respective walls (outside-in filtration). In that case, at least the outer walls of the hollow fibre membranes should be photocatalytic. Optionally, hollow fibre membranes can be used which can also perform as optical fibres, such as silica glass membrane fibres.

The membrane can be a ceramic membrane, e.g., of alumina, titania, zirconia, silica, silicon carbide or mixtures thereof. Optionally, the membranes can be laminated membranes comprising a plurality of layers of the same or different pore size made of, e.g., alumina - such as alpha alumina and/or gamma alumina - titania, zirconia, silica, silicon carbide or mixtures thereof.

Polymeric membranes can also be used, particularly membranes of polymers which are resistant to the photocatalytic activity. Suitable polymers include cellulose acetate, cellulose nitrate, polyacrylonitrile, polyamide, polyethersulfone, polyimide, polysulfone, polyvinyl alcohol, polyvinylidene fluoride or mixtures and/or hybrids thereof.

The membrane material can be photocatalytic, for instance if it comprises anatase and/or brooktite titanium dioxide. In such case, the membrane material may for instance comprise at least 80 wt.%, e.g., at least 90 wt.% or at least 95 wt.% of anatase, brooktite or nano-TiO2. Lower contents can also be used if so desired. Optionally, the membrane material can be spiked, e.g., with nitrogen ions or doped, e.g., with one or more metal oxides like tungsten trioxide, anatase or brooktite nanoparticles and/or Ti02 nanotubes or nanoribbons.

Alternatively, or additionally, the channel walls may be coated with a photocatalytic coating, e.g., comprising anatase and/or brooktite titanium dioxide and/or Ti02 nanotubes, nanoribbons and/or nanoparticles. In such case, the coating material may for instance comprise at least 80 wt.%, e.g., at least 90 wt.% or at least 95 wt.% of anatase, brooktite or nano-TiO2. Lower contents can also be used if so desired. A commercially available example of a suitable Ti02 photocatalyst is Hombikat® UV100, ex. Sachtleben AG, Germany.

Coating can for instance be carried out by wash coating or dip coating. Other suitable application methods include for instance spraying or vapour deposition techniques.

The layer thickness of the photocatalytic coating can for instance be about 1 - 9 micrometer, e.g., about 2 - 4 micrometer. Thicker or thinner layers can also be used, if so desired.

Optionally, the membrane material and/or the photocatalytic coating can comprise additives, such as activated carbon, zeolites, activated alumina and/or carbon nanotubes.

The light can for instance be UV light, more particularly UV light having a wave length maximizing the photocatalytic activity of the used material. If the photocatalytic material is based on anatase, particularly suitable wave lengths are below 500 nm, e.g., below 400 nm. Particularly suitable are wavelengths in the range of 275 - 388 nm.

Suitable UV light sources are for instance mercury short arc lamps, xenon lamps or LED's. Other UV-emitting lamp types can also be used, alone or in combination.

The optical fibre conducts light from a light source irradiating the photocatalytic channel walls. The light source may be positioned outside the channel. One light source can be used to supply light via a plurality of optical fibres into a large number of channels.

Suitable optical fibres are for instance made of a glass, such as silica glasses, chalcogenide glasses, phosphate glasses or fluoride glasses, such as fluorozirconate or fluoroaluminate glasses. Alternatively, the fibres can comprise crystalline materials like sapphire, or Plastic Optical Fibre (POF), for instance of poly(methyl methacrylate) (PMMA) or perfluorinated polymers, such as polyperfluorobutenylvinylether.

The fibre material can for instance be doped, e.g., with germanium dioxide (Ge02), aluminium oxide (Al203), fluorine, boron trioxide (B₂O₃) or rare earth materials.

Optical fibres are typically provided with a cladding of a lower refractive index in order to prevent radial light emission. However, for the present invention, radial light emission is desired, so preferably optical fibres are used without such a cladding. Optionally, the fibres can comprise a cladding with a gradually decreasing thickness, to optimize light distribution over the length of the fibres.

To improve side light emission by the optical fibres the ends of the fibres may be coated with a reflective material, such as aluminium or an aluminium alloy.

The fibres can for since be bundles of smaller fibres, e.g., of about 80 to about 120 fibres.

The fibres can heave any suitable diameter, e.g., a diameter of about 0,4 - 0.6 mm.

The membrane can for instance be encased in a housing, e.g., a cylinder, defining a discharge channel for filtered water. The housing will typically have an inlet connecting the inlet side of the membrane to a supply of water to be treated, and an outlet at an opposite end for the discharge of retentate. Further, it will typically have one or more discharge channels, e.g., at a side face, for the discharge of treated water. Optionally, it can also be provided with a supply connection for the supply of fresh water or a cleaning liquid for cleaning the membrane by a reverse flow.

Water to be treated can for instance be passed through the channels in the membrane under a pressure of 0,5 bar or higher, e.g., at least 5 bar or at least 10 bar. Lower pressures can also be used if so desired. The water can for instance be passed through the channels in the membrane under a pressure of 60 bar or lower, e.g., at most 40 bar or at most 20 bar. Higher pressures can also be used if so desired. Any one of these upper limits can be combined with any one of the afore mentioned lower limits to form a suitable pressure range.

The disclosed device is particularly suitable for removing organic hydrocarbon contaminations.

The invention will be further described under reference to the accompanying drawings. In the drawings:
Figure 1: shows an exemplary embodiment of a device according to the present invention;
Figure 2: shows the device of Figure 1 in cross section.

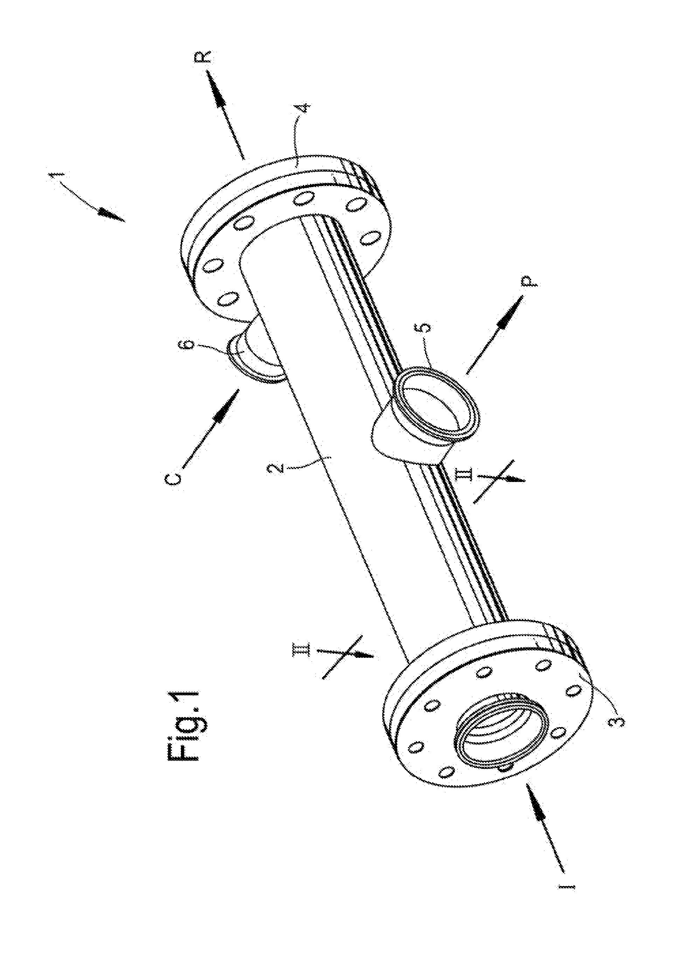

Figure 1 shows a water filtering device 1 comprising a hollow cylindrical housing 2 with a flanged inflow end 3, operatively connected to a supply channel for water to be treated (not shown). At its opposite end the housing 2 is provided with a flanged outflow end 4 for the discharge of retentate. About halfway the inflow end 3 and the outflow end 4, the housing 2 comprises a first lateral branch 5 operatively connected to a discharge channel for the discharge of treated water (not shown). Near the outflow end 4 the housing 2 comprises a second lateral branch 6 extending in a direction opposite to the direction of the first branch 5.

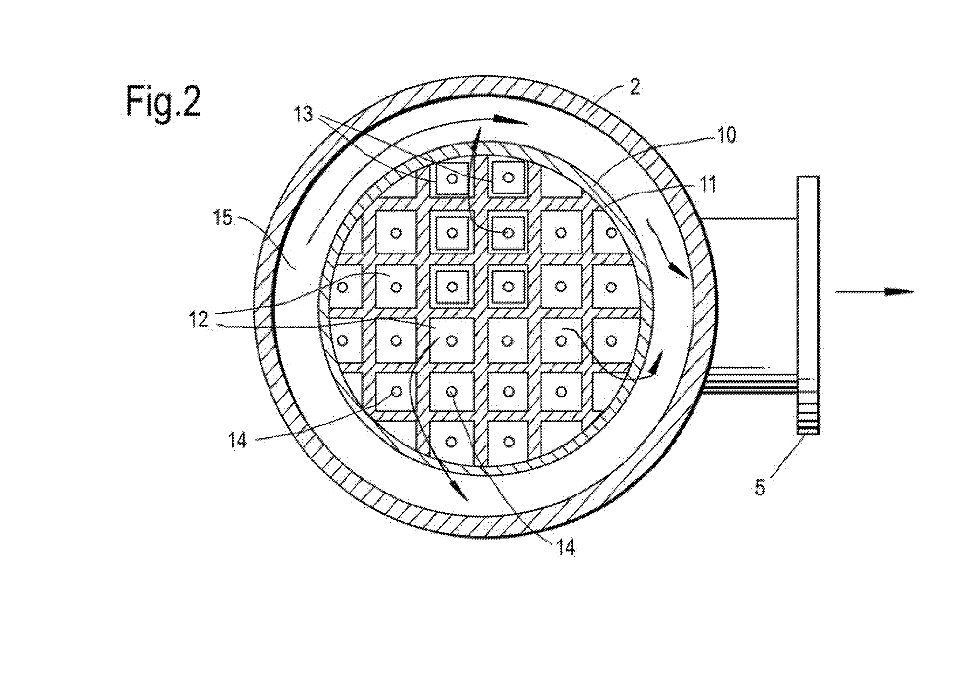

A monolith membrane 10 is encased within the housing 2, as shown in Figure 2. The membrane 10 comprises a cylindrical periphery 11 surrounding a grid of parallel channels 12 extending in a direction parallel to the longitudinal direction of the cylindrical housing 2. In other suitable embodiments, multi-channel membranes can be used, e.g., with an array of channels with circular cross sections and/or wedge shaped cross sections or with any other suitable cross section.

The inner walls of the channels 12 are provided with a photocatalyic coating 13 of anatase or any other suitable photocatalytic material or composition.

In each of the channels 12 an optical fibre 14 is provided running from the inflow end 3 to the outflow end 4 of the membrane 10. All fibres 14 are operatively connected to a UV light source (not shown).

Between the outer periphery 11 of the membrane 10 and the inner wall of the cylindrical housing 2 remains an annular permeate collection channel 15 which is in open connection with the lateral branches 5, 6 of the cylindrical housing 2.

During operation of the device 1, the second lateral branch 6 is closed off and water is supplied to the device 1 via the inflow end 3 of the cylindrical housing 2 in the direction of arrow I in Figure 1. The inflow end 3 is in open connection with the channels 12 of the membrane, but is sealed from the annular permeate collection channel 15. Water is fed under pressure into the channels 12, while the photocatalytic coating 13 in the channels 12 is exposed to UV light guided through the fibers 14. Under the influence of the photocatalytic activity of the photocatalytic coating 13 contaminants in the water are decomposed. Simultaneously the water is forced to pass the channel walls and flows via the channel walls to the outer periphery 11 where it enters the annular permeate collection channel 15. Subsequently, the filtered water is discharged via the lateral branch 5 in the direction indicated in Figure 1 by arrow P.

A concentrate of contaminants is retained in the channels 12 as a retentate and is subsequently discharged via the outflow end 4 in the direction indicated in Figure 1 by arrow R.

When the device 1 needs to be cleaned the inflow end 3 and the first lateral branch 5 are closed off and the second lateral branch 6 is opened and connected to a supply of cleaning water of a high purity (not shown) or of any other suitable cleaning liquid or gas. The cleaning medium is forced in the direction indicated in Figure 1 by arrow C to enter the membrane 10 via the outer periphery 11 through the channel walls into the channels 12. Contaminants retained in the membrane material or in the photocatalytic coating layer are flushed away and discharged via the outflow end 4.

## Claims

1. A device for water treatment comprising a housing encasing one or more membranes and a permeate collection channel at least partly surrounding the one or more membranes, wherein the membranes comprise one or more channels between a supply for untreated water and a discharge for retentate, wherein at least a part of the channels is provided with photocatalytic channel walls within a light exposure scope of one or more optical fibres connected to a light source.

2. A device according to claim 1 wherein the membrane is a submicron filtration membrane.

3. A device according to claim 2 wherein the membrane is an ultrafiltration membrane.

4. A device according to any one of the preceding claims wherein the walls of the channel are coated with a photocatalytic material comprises anatase and/or brooktite titanium dioxide.

5. A device according to any one of the preceding claims wherein the membrane is at least partly made of a photocatalytic material.

6. A device according to any one of the preceding claims wherein the light source is a UV light source.

7. A device according to anyone of the preceding claims wherein at least a part of the optical conductors are glass fibres.

8. A device according to any one of the preceding claims wherein the membrane is a monolithic membrane, a multi-channel membrane or a bundle of hollow fibre membranes.

9. A device according to any one of the preceding claims wherein the membrane has an area to volume ratio of 30 - 800 m²/m³, e.g., of 150 - 750 m²/m³.

10. A process for treatment of water by filtration using a photocatalytic membrane, wherein light is guided from a light source to the membrane via a optical fibre.
